(19) **Europäisches Patentamt / European Patent Office / Office européen des brevets**

(11) **EP 3 012 962 A1**

(12) **DEMANDE DE BREVET EUROPEEN**

(43) Date de publication:
**27.04.2016 Bulletin 2016/17**

(51) Int Cl.:
***H02P 6/18*** (2016.01)

(21) Numéro de dépôt: **15306595.8**

(22) Date de dépôt: **09.10.2015**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA**

(30) Priorité: **23.10.2014 FR 1460185**

(71) Demandeur: **Renault S.A.S.**
**92100 Boulogne-Billancourt (FR)**

(72) Inventeurs:
• **KOTEICH, Mohamad**
**91400 Orsay (FR)**
• **MALOUM, Abdelmalek**
**94550 Chevilly La Rue (FR)**
• **DUC, Gilles**
**78830 Bullion (FR)**
• **SANDOU, Guillaume**
**91400 Gometz-la-Ville (FR)**

(54) **PROCÉDÉ DE COMMANDE D'UNE MACHINE ÉLECTRIQUE TRIPHASÉE SYNCHRONE À ROTOR BOBINÉ**

(57) Le procédé de commande d'une machine électrique triphasée synchrone à rotor bobiné pour véhicule automobile électrique ou hybride, comprend des étapes au cours desquelles :
on mesure les courants et tensions au niveau des phases du rotor et du stator dans le repère triphasé,
on détermine les courants et tensions au niveau des phases du rotor et du stator dans le repère diphasé en fonction des mesures de courant et de tension dans le repère triphasé.
Le procédé comprend des étapes au cours desquelles on détermine les flux magnétiques dans le repère diphasé par l'intermédiaire d'un modèle non linéaire de la machine synchrone à rotor bobiné combiné à la méthode de l'observateur, en fonction notamment des mesures de tension et de courant dans le repère diphasé, et de paramètres de gain,
on détermine la position angulaire du rotor par rapport au stator en fonction des flux magnétiques dans le repère diphasé, des courants statoriques dans le repère diphasé et des inductances de la machine.

**Description**

L'invention a pour domaine technique la commande de machines électriques et plus particulièrement la commande de machines électriques synchrone à rotor bobiné.

La commande avancée des machines électriques triphasées nécessite une bonne connaissance de la position du rotor de la machine. On emploie pour cela un capteur de position, également appelé résolveur, branché sur l'arbre de sortie de la machine électrique, la valeur de l'angle rotorique mesurée est envoyée au contrôleur qui pilote la machine électrique. Pour plusieurs raisons (coût, fiabilité, encombrement...), on cherche à éliminer les capteurs mécaniques, et à les remplacer par des capteurs logiciels (observateurs/estimateurs) qui estiment la position de la machine électrique à partir des mesures disponibles (courants, tensions).

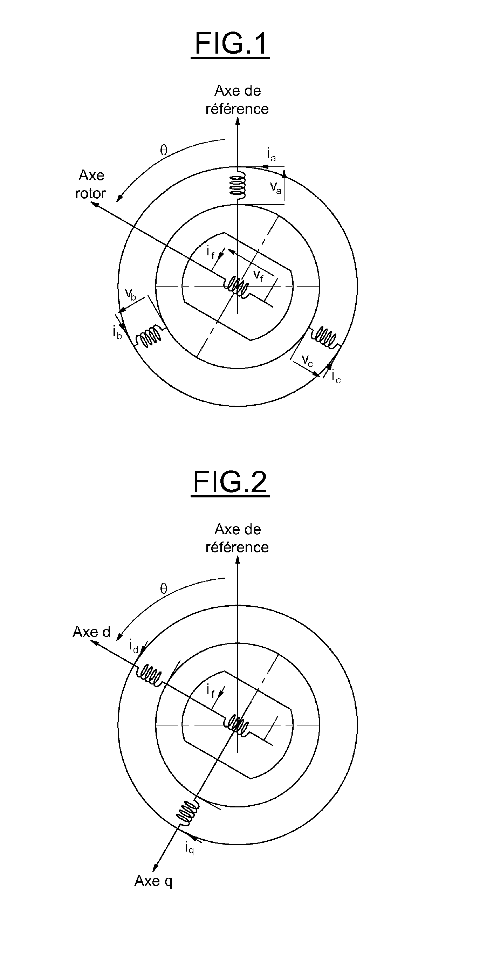

Une machine électrique synchrone à rotor bobiné comprend deux parties illustrées par la figure 1, un stator triphasé et un rotor bobiné.

Le stator triphasé (phases a, b et c) est construit de façon à générer un champ magnétique tournant.

Le rotor bobiné comporte un bobinage alimenté par un courant continu (phase f). L'amplitude du champ, créé dans l'entrefer, est variable et réglable à travers le courant d'alimentation du rotor. La bobine rotorique est un électro-aimant qui cherche à s'aligner avec le champ magnétique tournant produit par le stator. Le rotor tourne à la même fréquence que les courants statoriques, ce qui est à l'origine de l'appellation machine « synchrone ».

Les inductances statoriques propres et mutuelles dépendent de la position $\theta$ du rotor non cylindrique (dit à « pôles saillants »). La commande de la machine se fait dans le repère de Park, qui est la transformée du repère statorique fixe par la transformation de rotation, ce qui nécessite la connaissance de la valeur de l'angle rotorique $\theta$. La matrice de transformation de Park qui transforme les grandeurs triphasées (a,b,c) en grandeurs continues (d,q,0) est la suivante. Il est à noter que les composantes homopolaires (0) seront négligées dans la suite car le système triphasé est équilibré.

$$P(\theta) = \begin{bmatrix} \cos\theta & \cos\left(\theta - \dfrac{2\pi}{3}\right) & \cos\left(\theta + \dfrac{2\pi}{3}\right) \\ -\sin\theta & -\sin\left(\theta - \dfrac{2\pi}{3}\right) & -\sin\left(\theta + \dfrac{2\pi}{3}\right) \\ \dfrac{\sqrt{2}}{2} & \dfrac{\sqrt{2}}{2} & \dfrac{\sqrt{2}}{2} \end{bmatrix} \qquad (\text{Eq. 1})$$

Le schéma équivalent de la machine électrique dans le repère de Park est illustré par la figure 2.

Plusieurs méthodes d'estimation et d'observation de la position rotorique des machines électriques synchrones existent dans la littérature. Une méthode comprenant l'estimation des flux et le calcul de la position $\theta$ à partir de ces grandeurs estimées est l'une des méthodes efficaces pour les machines électriques à pôles lisses. Dans le cas du présent document, la machine électrique est de type synchrone à rotor bobiné. Son rotor est à pôles saillants (non cylindriques). Les inductances statoriques dépendent de la position angulaire du rotor. Pour ce type de machine électrique, la complexité des équations par rapport aux machines électriques à pôles lisses ne permet pas de disposer d'une formule de calcul de la position $\theta$ à partir des flux.

Pour résoudre ce problème, un nouvel observateur de flux est mis en oeuvre, et la formule de $\theta$ en fonction des flux et des courants est établie.

La commande de la machine électrique utilise deux capteurs, des capteurs électriques permettant de déterminer des courants et des capteurs mécaniques permettant de déterminer la position et/ou la vitesse. Les capteurs électriques sont beaucoup moins chers et moins encombrants que les capteurs mécaniques, et sont indispensables pour plusieurs raisons (sûreté de fonctionnement, asservissement de la boucle de courant, etc.). Afin de réaliser des économies de couts et de masse, on cherche à remplacer le capteur de position (résolveur) par un capteur logiciel (algorithme) apte à estimer les flux dans la machine électrique et la position angulaire du rotor à partir de mesures de courants. Pour ce faire, on se base sur les équations de la machine, et sur la théorie d'observateur.

Le modèle de la machine synchrone à rotor bobiné est fortement non linéaire. Cela est dû au couplage entre les dynamiques des courants statoriques et rotorique, ainsi qu'à la dépendance des inductances statoriques de la position à cause de la saillance.

La machine électrique peut être modélisée dans un repère diphasé ($\alpha,\beta,0$) en réalisant les projections des grandeurs du repère triphasé (a,b,c) sur un repère diphasé lié au stator. La matrice de transformation correspondant à une telle projection est la suivante. On note que les composantes homopolaires ne sont pas prises en compte.

$$C_{32} = \begin{bmatrix} 1 & -1/2 & -1/2 \\ 0 & \sqrt{3}/2 & -\sqrt{3}/2 \end{bmatrix}$$

$$(\text{Eq. } 2)$$

Les équations électromagnétiques du système dans ce repère peuvent être écrites de la façon suivante :

$$v_\alpha = R_s i_\alpha + \frac{d\psi_\alpha}{dt}$$

$$v_\beta = R_s i_\beta + \frac{d\psi_\beta}{dt}$$

$$v_f = R_f i_f + \frac{d\psi_f}{dt}$$

$$(\text{Eq. } 3)$$

Avec :

$V_\alpha$ : la tension appliquée au stator sur l'axe $\alpha$ (correspondant à la tension aux bornes d'un enroulement diphasé équivalent aux enroulements triphasés, sur l'axe $\alpha$)
vp : la tension appliquée au stator sur l'axe $\beta$
$v_f$ : la tension rotorique
$i_\alpha$ : le courant circulant dans le stator sur l'axe $\alpha$
ip : le courant circulant dans le stator sur l'axe $\beta$
$i_f$ : le courant rotorique

$\psi_\alpha$ : le flux électromagnétique statorique sur l'axe $\alpha$
$\psi_\beta$ : le flux électromagnétique statorique sur l'axe $\beta$
$\psi_f$ : le flux électromagnétique rotorique

$R_s$ : la résistance statorique
$R_f$ : la résistance rotorique

Les flux sont déterminés par les équations suivantes :

$$\psi_\alpha = L_\alpha i_\alpha + L_{\alpha\beta} i_\beta + M_f i_f \cos\theta$$

$$\psi_\beta = L_{\alpha\beta} i_\alpha + L_\beta i_\beta + M_f i_f \sin\theta$$

$$\psi_f = M_f i_\alpha \cos\theta + M_f i_\beta \sin\theta + L_f i_f$$

$$(\text{Eq. } 4)$$

Ces équations peuvent être réécrites sous forme matricielle de la façon suivante :

$$\begin{bmatrix} \psi_\alpha \\ \psi_\beta \\ \psi_f \end{bmatrix} = [L(\theta)] \begin{bmatrix} i_\alpha \\ i_\beta \\ i_f \end{bmatrix}$$

$$(\text{Eq. } 5)$$

avec
$L_\alpha$, $L_\beta$: les inductances cycliques des phases $\alpha$, $\beta$

$L_f$ : l'inductance propre du bobinage rotorique.

$M_f$ : l'inductance mutuelle maximale entre une phase statorique et la phase rotorique.

$L_{\alpha\beta}$ : l'inductance mutuelle entre les phases statoriques

On connaît par ailleurs les relations suivantes liant les inductances cycliques et l'inductance mutuelle à la position $\theta$.

$$L_\alpha = L_0 + L_2 \cos 2\theta$$

$$L_\beta = L_0 - L_2 \cos 2\theta$$

$$L_{\alpha\beta} = L_2 \sin 2\theta \qquad\qquad (\text{Eq. } 6)$$

Les paramètres $L_0$ et $L_2$ dépendent de l'architecture de la machine utilisée, notamment de sa saillance. Ils sont connus pour une machine donnée.

$$L_0 = (L_d + L_q)/2 \; ; \qquad\qquad (\text{Eq. } 7)$$

$$L_2 = (L_d - L_q)/2$$

Avec :

$L_d$ et Lq sont les inductances suivant les axes de Park.

De l'état de la technique, on connaît les documents suivants.

Le document US 2013/0289934A1 décrit un procédé pour estimer le flux du stator à partir des signaux de la tension et des courants de la machine, servant ensuite à estimer le flux rotorique de la machine à partir du flux statorique. Le procédé comprend aussi la détermination de l'angle électrique et sa dérivée. Ce procédé s'applique uniquement à des machines asynchrones et n'est pas transposable aux machines à rotor bobiné.

Le document US 2007/0194742A1 décrit l'estimation du flux sans impliquer un observateur au sens propre du terme mais plutôt avec des signaux sinusoïdaux décalés.

Le document CN102983806 décrit une simple technique d'estimation du flux statorique.

Le document CN102437813 décrit une méthode pour remonter à l'angle et à la vitesse du rotor à partir du flux rotorique, pour une machine synchrone à aimant permanent. Par ailleurs, l'enseignement du document implique une utilisation extensive du filtrage physique au travers d'une extraction de la fondamentale de la tension et courant du rotor.

Il demeure ainsi deux problèmes techniques à résoudre relatifs à l'estimation des flux $\psi_\alpha$ et $\psi_\beta$ à partir des mesures de courants et de tensions et au calcul de la position $\theta$ à partir des flux estimés et des mesures.

L'invention a pour objet un procédé de commande d'une machine électrique triphasée synchrone à rotor bobiné pour véhicule automobile électrique ou hybride, comprenant des étapes au cours desquelles on mesure les courants et tensions au niveau des phases du rotor et du stator de la machine dans un repère triphasé fixe lié au stator, et on peut déterminer les courants et tensions au niveau des phases du rotor et du stator dans un repère diphasé lié au stator en fonction des mesures de courant et de tension dans le repère triphasé.

Le procédé comprend ensuite des étapes au cours desquelles on peut déterminer les flux magnétiques dans le repère diphasé par l'intermédiaire d'un modèle de comportement des flux de la machine synchrone à rotor bobiné combiné à l'utilisation d'un observateur d'état, en fonction des mesures de tension et de courant transposées dans le repère diphasé lors de l'étape de détermination des courants et tensions au niveau des phases du rotor et du stator dans un repère diphasé lié au stator, et de paramètres de gain, et on peut déterminer la position angulaire du rotor par rapport au stator en fonction des flux magnétiques dans le repère diphasé, des courants statoriques dans le repère diphasé et des inductances de la machine.

On peut déterminer un écart de tension selon le premier axe statorique du repère diphasé comme la soustraction du produit de la résistance de stator par le courant mesuré selon le premier axe statorique du repère diphasé de la tension mesurée statorique selon le premier axe du repère diphasé, on peut déterminer une première somme en additionnant le produit de l'inductance cyclique statorique selon le premier axe du repère diphasé par le courant statorique mesuré selon le premier axe du repère diphasé, le produit de l'inductance mutuelle statorique dans le repère diphasé par le courant statorique mesuré du deuxième axe du repère diphasé, le produit de l'inductance mutuelle maximale entre un axe statorique du repère diphasé et le rotor par le courant de rotor mesuré et transformé dans le repère diphasé par le cosinus de la position angulaire observée du rotor par rapport au stator et l'opposé du flux magnétique statorique observé selon le premier axe du repère diphasé, on peut déterminer le produit de la première somme par un premier gain, puis on peut déterminer la dérivée temporelle du flux magnétique statorique observé selon le premier axe du repère diphasique comme étant égale à la somme de l'écart de tension selon le premier axe du repère diphasique et du produit du premier gain par la première somme.

On peut déterminer un écart de tension selon le deuxième axe statorique du repère diphasé comme la soustraction du produit de la résistance de stator par le courant mesuré selon le deuxième axe statorique du repère diphasé de la tension mesurée statorique selon le deuxième axe du repère diphasé, on peut déterminer une deuxième somme en additionnant le produit de l'inductance cyclique statorique selon le deuxième axe du repère diphasé par le courant statorique mesuré selon le deuxième axe du repère diphasé, le produit de l'inductance mutuelle statorique dans le repère diphasé par le courant statorique mesuré du premier axe du repère diphasé, le produit de l'inductance mutuelle maximale entre un axe statorique du repère diphasé et le rotor par le courant de rotor mesuré et transformé dans le repère diphasé par le sinus de la position angulaire observée du rotor par rapport au stator et l'opposé du flux magnétique statorique observé selon le deuxième axe du repère diphasé, on peut déterminer le produit de la deuxième somme par un deuxième gain, puis on peut déterminer la dérivée temporelle du flux magnétique statorique observé selon le deuxième axe du repère diphasique comme étant égale à la somme de l'écart de tension selon le deuxième axe statorique du repère diphasique et du produit du deuxième gain par la deuxième somme.

On peut déterminer un écart de tension rotorique dans le repère diphasé lié au stator comme la soustraction du produit de la résistance de rotor par le courant rotorique mesuré et transformé dans le repère diphasé de la tension rotorique mesurée dans le repère diphasé, on peut déterminer une troisième somme en additionnant le produit de l'inductance propre rotorique dans le repère diphasé par le courant rotorique mesuré dans le repère diphasé, le produit de l'inductance mutuelle maximale entre les axes statoriques du repère diphasé et le rotor par la somme entre le courant de stator mesuré selon le premier axe du repère diphasé multiplié par le cosinus de la position angulaire observée du rotor par rapport au stator et le courant statorique mesuré selon le deuxième axe du repère diphasé multiplié par le sinus de la position angulaire observée du rotor par rapport au stator et l'opposé du flux magnétique rotorique observé dans le repère diphasé, on peut déterminer le produit de la troisième somme par un troisième gain, puis on peut déterminer la dérivée temporelle du flux magnétique rotorique observé dans le repère diphasique comme étant égale à la somme de l'écart de tension rotorique dans le repère diphasique et du produit du troisième gain par la troisième somme.

On peut déterminer un premier paramètre égal à la moitié de la somme de l'inductance directe dans le repère de Park et de l'inductance en quadrature dans le repère de Park, on peut déterminer un deuxième paramètre égal à la moitié de la soustraction de l'inductance en quadrature dans le repère de Park de l'inductance directe dans le repère de Park, on peut déterminer un flux magnétique statorique corrigé selon le premier axe du repère diphasique comme le flux magnétique déterminé selon le premier axe statorique auquel est soustrait le produit du courant statorique selon le premier axe dans le repère diphasique par la différence entre le premier paramètre et le deuxième paramètre, on peut déterminer un flux magnétique statorique corrigé selon le second axe du repère diphasique comme le flux magnétique déterminé selon le second axe statorique auquel est soustrait le produit du courant statorique selon le second axe dans le repère diphasique par la différence entre le premier paramètre et le deuxième paramètre, et on peut déterminer la position angulaire du rotor par rapport au stator comme l'arctangente du rapport entre le flux magnétique statorique corrigé selon le second axe dans le repère diphasique par le flux magnétique statorique corrigé selon le premier axe dans le repère diphasique.

Ce procédé présente l'avantage d'une robustesse vis-à-vis des paramètres mécaniques. Les équations ne dépendent d'aucune information relative aux paramètres mécaniques de la machine électrique.

Ce procédé présente également l'avantage d'un réglage facile puisque les gains peuvent être égaux et sont directement liés aux dynamiques de l'observateur.

Enfin, le procédé a l'avantage d'un observateur stable et d'une implémentation facilitée grâce à la linéarité du système.

D'autres buts, caractéristiques et avantages de l'invention apparaîtront à la lecture de la description suivante, donnée uniquement à titre d'exemple non limitatif et faite en référence aux dessins annexés sur lesquels :

- la figure 1 illustre les principaux éléments d'une machine électrique synchrone à rotor bobiné dans un repère triphasé,
- la figure 2 illustre les principaux éléments d'une machine électrique synchrone à rotor bobiné dans le repère de Park, et
- la figure 3 illustre les principales étapes du procédé de commande selon l'invention.

La machine électrique décrite en introduction est considérée comme le système à observer. Elle est modélisée par les équations suivantes dérivées des équations Eq. 3 :

$$\frac{d\psi_\alpha}{dt} = v_\alpha - R_s i_\alpha$$

$$\frac{d\psi_\beta}{dt} = v_\beta - R_s i_\beta$$

$$\frac{d\psi_f}{dt} = v_f - R_f i_f \qquad\qquad (\text{Eq. } 8)$$

Ce système est évalué par la méthode de l'observateur d'état.

On rappelle qu'un observateur d'état, en automatique et en théorie de l'information, est une extension d'un modèle représenté sous forme de représentation d'état. Lorsque l'état d'un système n'est pas mesurable, on conçoit un observateur qui permet de reconstruire l'état à partir d'un modèle du système dynamique et des mesures d'autres grandeurs.

On définit un système à observer de la façon suivante :

$$\begin{cases} \dfrac{d}{dt}x = f(x,u) \\ y = C.x \end{cases} \qquad\qquad (\text{Eq. } 9)$$

L'équation d'un observateur pour ce système s'écrit alors de la façon suivante :

$$\frac{d}{dt}\hat{x} = f(\hat{x},u) + K(y - C.\hat{x}) \qquad\qquad (\text{Eq. } 10)$$

Le réglage de l'observateur se fait par le choix du gain K, qui multiplie le terme d'erreur.

On applique maintenant la méthode de l'observateur d'état à la machine électrique synchrone à rotor bobiné.

On définit alors le vecteur d'état x comme la matrice suivante :

$$x = \begin{bmatrix} \psi_\alpha \\ \psi_\beta \\ \psi_f \end{bmatrix} \qquad\qquad (\text{Eq. } 11)$$

On définit l'entrée u de l'observateur comme la matrice suivante :

$$u = \begin{bmatrix} v_\alpha - R_s i_\alpha \\ v_\beta - R_s i_\beta \\ v_f - R_f i_f \end{bmatrix} \qquad\qquad (\text{Eq. } 12)$$

On définit la sortie y du système à observer comme la matrice suivante :

$$y = \begin{bmatrix} y_1 \\ y_2 \\ y_3 \end{bmatrix} = \left[ L(\theta) \right] \begin{bmatrix} i_\alpha \\ i_\beta \\ i_f \end{bmatrix} \qquad (Eq.\ 13)$$

A partir des équations Eq. 4 à Eq. 13, on pose les équations de l'observateur en temps continu :

$$\frac{d}{dt}\hat{\psi}_\alpha = v_\alpha - R_s i_\alpha + K_1 \left[ L_\alpha i_\alpha + L_{\alpha\beta} i_\beta + M_f i_f \cos\hat{\theta} - \hat{\psi}_\alpha \right]$$

$$\frac{d}{dt}\hat{\psi}_\beta = v_\beta - R_s i_\beta + K_2 \left[ L_\beta i_\beta + L_{\alpha\beta} i_\alpha + M_f i_f \sin\hat{\theta} - \hat{\psi}_\beta \right]$$

$$\frac{d}{dt}\hat{\psi}_f = v_f - R_f i_f + K_3 \left[ L_f i_f + M_f (i_\alpha \cos\hat{\theta} + i_\beta \sin\hat{\theta}) - \hat{\psi}_f \right] \qquad (Eq.\ 14)$$

La position angulaire θ est initialisée à une valeur, par exemple 0. L'équation Eq. 16 suivante est utilisée en conjonction avec cette valeur d'initialisation afin d'obtenir la valeur estimée $\hat{\theta}$. L'observateur permet de corriger l'écart entre la valeur estimée et la valeur réelle.

Indépendamment de l'initialisation de la valeur θ, il est à noter qu'une erreur sur l'initialisation de θ entraîne un fonctionnement légèrement dégradé jusqu'à ce que l'observateur converge (quelques millisecondes). Même pendant cette période de convergence, l'estimation de la valeur θ demeure améliorée par rapport à l'état de l'art antérieur. Les équations de l'observateur en temps continu peuvent être discrétisées par la méthode d'Euler :

$$\hat{\psi}_{\alpha(k+1)} = \hat{\psi}_{\alpha(k)} + T_s \left( v_{\alpha(k)} - R_s i_{\alpha(k)} + K_1 \left[ L_\alpha i_{\alpha(k)} + L_{\alpha\beta} i_{\beta(k)} + M_f i_{f(k)} \cos\hat{\theta}_{(k)} - \hat{\psi}_{\alpha(k)} \right] \right)$$

$$\hat{\psi}_{\beta(k+1)} = \hat{\psi}_{\beta(k)} + T_s \left( v_{\beta(k)} - R_s i_{\beta(k)} + K_2 \left[ L_\beta i_{\beta(k)} + L_{\alpha\beta} i_{\alpha(k)} + M_f i_{f(k)} \sin\hat{\theta}_{(k)} - \hat{\psi}_{\beta(k)} \right] \right)$$

$$\hat{\psi}_{f(k+1)} = \hat{\psi}_{f(k)} + T_s \left( v_{f(k)} - R_f i_{f(k)} + K_3 \left[ L_f i_{f(k)} + M_f (i_{\alpha(k)} \cos\hat{\theta}_{(k)} + i_{\beta(k)} \sin\hat{\theta}_{(k)}) - \hat{\psi}_{f(k)} \right] \right) (Eq.15)$$

Avec :

T$_s$ : la période d'échantillonnage.

Le réglage de l'observateur se fait par le choix du gain K = [K1, K2, K3]. Si ce gain est grand, la dynamique de l'observateur est plus rapide.

La position θ peut être calculée à l'instant k en résolvant le système défini par l'équation Eq. 4 pour obtenir la formule suivante :

$$\hat{\theta}_{(k)} = \arctan\left( \frac{\hat{\psi}_{\beta(k)} - (L_0 - L_2) i_{\beta(k)}}{\hat{\psi}_{\alpha(k)} - (L_0 - L_2) i_{\alpha(k)}} \right) \qquad (Eq.16)$$

$\hat{\theta}_{(k)}$ étant la position θ calculée à l'instant k, l'indice (k) utilisé sur les valeurs dans cette formule étant représentatif de l'instant k dans la discrétisation d'Euler.

Les flux $\psi_\alpha$ et $\psi_\beta$ sont déterminés par les équations Eq. 15.

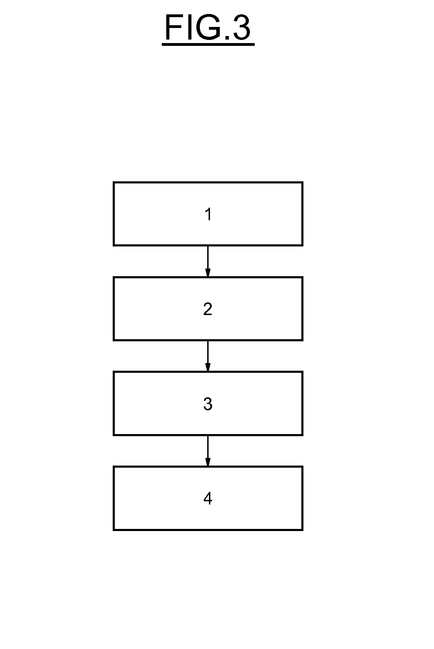

La figure 3 illustre les principales étapes du procédé de commande d'une machine électrique triphasée synchrone à rotor bobiné permettant de déterminer les flux magnétiques et la position du rotor par rapport au stator à partir des seules mesures de courants et de tension.

Au cours d'une première étape 1, on mesure les courants et tensions dans le stator et dans le rotor dans le repère triphasé.

Au cours d'une deuxième étape 2, on détermine les courants et tensions dans le stator et dans le rotor dans le repère diphasé à partir des mesures des courants et tensions dans le stator et dans le rotor dans le repère triphasé.

Au cours d'une troisième étape 3, on détermine les flux magnétiques par application de l'équation Eq. 15 de façon itérative.

Au cours d'une quatrième étape 4, on détermine la position angulaire θ du rotor par rapport au stator en fonction des flux magnétiques statorique, des courants statoriques et de paramètres liés aux inductances de la machine, par application de l'équation Eq. 16.

## Revendications

1. Procédé de commande d'une machine électrique triphasée synchrone à rotor bobiné pour véhicule automobile électrique ou hybride, comprenant des étapes au cours desquelles :

   on mesure les courants et tensions au niveau des phases du rotor et du stator de la machine dans un repère triphasé fixe lié au stator,
   on détermine les courants et tensions au niveau des phases du rotor et du stator dans un repère diphasé lié au stator en fonction des mesures de courant et de tension dans le repère triphasé,
   **caractérisé par le fait qu'**il comprend des étapes au cours desquelles on détermine les flux magnétiques dans le repère diphasé par l'intermédiaire d'un modèle de comportement des flux de la machine synchrone à rotor bobiné combiné à l'utilisation d'un observateur d'état, en fonction des mesures de tension et de courant transposées dans le repère diphasé lors de l'étape de détermination des courants et tensions au niveau des phases du rotor et du stator dans un repère diphasé lié au stator, et de paramètres de gain, et
   on détermine la position angulaire du rotor par rapport au stator en fonction des flux magnétiques dans le repère diphasé, des courants statoriques dans le repère diphasé et des inductances de la machine.

2. Procédé selon la revendication 1, dans lequel on détermine un écart de tension selon le premier axe statorique du repère diphasé comme la soustraction du produit de la résistance de stator par le courant mesuré selon le premier axe statorique du repère diphasé de la tension mesurée statorique selon le premier axe du repère diphasé, on détermine une première somme en additionnant :

   - le produit de l'inductance cyclique statorique selon le premier axe du repère diphasé par le courant statorique mesuré selon le premier axe du repère diphasé,
   - le produit de l'inductance mutuelle statorique dans le repère diphasé par le courant statorique mesuré du deuxième axe du repère diphasé,
   - le produit de l'inductance mutuelle maximale entre un axe statorique du repère diphasé et le rotor par le courant de rotor mesuré et transformé dans le repère diphasé par le cosinus de la position angulaire observée du rotor par rapport au stator, et
   - l'opposé du flux magnétique statorique observé selon le premier axe du repère diphasé,

   on détermine le produit de la première somme par un premier gain, puis on détermine la dérivée temporelle du flux magnétique statorique observé selon le premier axe du repère diphasique comme étant égale à la somme de l'écart de tension selon le premier axe du repère diphasique et du produit du premier gain par la première somme.

3. Procédé selon la revendication précédente, dans lequel on détermine un écart de tension selon le deuxième axe statorique du repère diphasé comme la soustraction du produit de la résistance de stator par le courant mesuré selon le deuxième axe statorique du repère diphasé de la tension mesurée statorique selon le deuxième axe du repère diphasé, on détermine une deuxième somme en additionnant :

   - le produit de l'inductance cyclique statorique selon le deuxième axe du repère diphasé par le courant statorique mesuré selon le deuxième axe du repère diphasé,
   - le produit de l'inductance mutuelle statorique dans le repère diphasé par le courant statorique mesuré du premier axe du repère diphasé,
   - le produit de l'inductance mutuelle maximale entre un axe statorique du repère diphasé et le rotor par le courant de rotor mesuré et transformé dans le repère diphasé par le sinus de la position angulaire observée du rotor par rapport au stator et

- l'opposé du flux magnétique statorique observé selon le deuxième axe du repère diphasé,

on détermine le produit de la deuxième somme par un deuxième gain, puis on détermine la dérivée temporelle du flux magnétique statorique observé selon le deuxième axe du repère diphasique comme étant égale à la somme de l'écart de tension selon le deuxième axe statorique du repère diphasique et du produit du deuxième gain par la deuxième somme.

4. Procédé selon la revendication précédente, dans lequel on détermine un écart de tension rotorique dans le repère diphasé lié au stator comme la soustraction du produit de la résistance de rotor par le courant rotorique mesuré et transformé dans le repère diphasé de la tension rotorique mesurée dans le repère diphasé, on détermine une troisième somme en additionnant :

- le produit de l'inductance propre rotorique dans le repère diphasé par le courant rotorique mesuré dans le repère diphasé,
- le produit de l'inductance mutuelle maximale entre les axes statoriques du repère diphasé et le rotor par la somme entre le courant de stator mesuré selon le premier axe du repère diphasé multiplié par le cosinus de la position angulaire observée du rotor par rapport au stator et le courant statorique mesuré selon le deuxième axe du repère diphasé multiplié par le sinus de la position angulaire observée du rotor par rapport au stator,
- et l'opposé du flux magnétique rotorique observé dans le repère diphasé,

on détermine le produit de la troisième somme par un troisième gain,

puis on détermine la dérivée temporelle du flux magnétique rotorique observé dans le repère diphasique comme étant égale à la somme de l'écart de tension rotorique dans le repère diphasique et du produit du troisième gain par la troisième somme.

5. Procédé selon l'une quelconque des revendications précédentes dans lequel

on détermine un premier paramètre égal à la moitié de la somme de l'inductance directe dans le repère de Park et de l'inductance en quadrature dans le repère de Park,

on détermine un deuxième paramètre égal à la moitié de la soustraction de l'inductance en quadrature dans le repère de Park de l'inductance directe dans le repère de Park,

on détermine un flux magnétique statorique corrigé selon le premier axe du repère diphasique comme le flux magnétique déterminé selon le premier axe statorique auquel est soustrait le produit du courant statorique selon le premier axe dans le repère diphasique par la différence entre le premier paramètre et le deuxième paramètre,

on détermine un flux magnétique statorique corrigé selon le second axe du repère diphasique comme le flux magnétique déterminé selon le second axe statorique auquel est soustrait le produit du courant statorique selon le second axe dans le repère diphasique par la différence entre le premier paramètre et le deuxième paramètre, et

on détermine la position angulaire du rotor par rapport au stator comme l'arctangente du rapport entre le flux magnétique statorique corrigé selon le second axe dans le repère diphasique par le flux magnétique statorique corrigé selon le premier axe dans le repère diphasique.

## FIG.1

Axe de
référence

θ

Axe
rotor

$i_a$

$v_a$

$i_f$

$v_f$

$v_b$

$i_b$

$v_c$

$i_c$

## FIG.2

Axe de
référence

θ

Axe d

$i_d$

$i_f$

$i_q$

Axe q

# FIG.3

```
┌─────────────────────┐
│          1          │
└─────────────────────┘
           │
           ▼
┌─────────────────────┐
│          2          │
└─────────────────────┘
           │
           ▼
┌─────────────────────┐
│          3          │
└─────────────────────┘
           │
           ▼
┌─────────────────────┐
│          4          │
└─────────────────────┘
```

Europäisches
Patentamt

European
Patent Office

Office européen
des brevets

**RAPPORT DE RECHERCHE EUROPEENNE**

Numéro de la demande

EP 15 30 6595

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | TURSINI M ET AL: "Sensorless control of an IPM synchronous motor for city-scooter applications", CONFERENCE RECORD OF THE 2003 IEEE INDUSTRY APPLICATIONS CONFERENCE. 38TH. IAS ANNUAL MEETING . SALT LAKE CITY, UT, OCT. 12 - 16, 2003; [CONFERENCE RECORD OF THE IEEE INDUSTRY APPLICATIONS CONFERENCE. IAS ANNUAL MEETING], NEW YORK, NY : IEEE, US, vol. 3, 12 octobre 2003 (2003-10-12), pages 1472-1479, XP010676190, DOI: 10.1109/IAS.2003.1257751 ISBN: 978-0-7803-7883-4 * le document en entier * ----- | 1-5 | INV. H02P6/18 |
| Y | KOJOOYAN-JAFARI HENGAMEH ET AL: "Parameter Estimation of Wound-Rotor Induction Motors From Transient Measurements", IEEE TRANSACTIONS ON ENERGY CONVERSION, IEEE SERVICE CENTER, PISCATAWAY, NJ, US, vol. 29, no. 2, 1 juin 2014 (2014-06-01), pages 300-308, XP011548594, ISSN: 0885-8969, DOI: 10.1109/TEC.2014.2300236 [extrait le 2014-05-15] * page 300 - page 301 * ----- | 1-5 | DOMAINES TECHNIQUES RECHERCHES (IPC) H02P |
| A,D | CN 102 437 813 B (DONGFANG ELECTRIC CORP) 9 avril 2014 (2014-04-09) * le document en entier * ----- | 1-5 | |
| A | EP 1 345 315 A1 (YASKAWA DENKI SEISAKUSHO KK [JP]) 17 septembre 2003 (2003-09-17) * alinéas [0005], [0006] * ----- -/-- | 1-5 | |

Le présent rapport a été établi pour toutes les revendications

| Lieu de la recherche | Date d'achèvement de la recherche | Examinateur |
|---|---|---|
| Munich | 3 mars 2016 | Fraissé, Stéphane |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 15 30 6595

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2002/060546 A1 (VELTMAN ANDRE [NL]) 23 mai 2002 (2002-05-23) * le document en entier * ----- | 1-5 | |

| | | | DOMAINES TECHNIQUES RECHERCHES (IPC) |
|---|---|---|---|

Le présent rapport a été établi pour toutes les revendications

| Lieu de la recherche | Date d'achèvement de la recherche | Examinateur |
|---|---|---|
| Munich | 3 mars 2016 | Fraissé, Stéphane |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
.........................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 15 30 6595

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-03-2016

| Document brevet cité au rapport de recherche | | Date de publication | Membre(s) de la famille de brevet(s) | | Date de publication |
|---|---|---|---|---|---|
| CN 102437813 | B | 09-04-2014 | AUCUN | | |
| EP 1345315 | A1 | 17-09-2003 | CN | 1481604 A | 10-03-2004 |
| | | | EP | 1345315 A1 | 17-09-2003 |
| | | | JP | 3707535 B2 | 19-10-2005 |
| | | | JP | 2002186295 A | 28-06-2002 |
| | | | KR | 20030061449 A | 18-07-2003 |
| | | | TW | 546907 B | 11-08-2003 |
| | | | US | 2004036441 A1 | 26-02-2004 |
| | | | WO | 0250993 A1 | 27-06-2002 |
| US 2002060546 | A1 | 23-05-2002 | AUCUN | | |

EPO FORM P0460

Pour tout renseignement concernant cette annexe : voir Journal Officiel de l'Office européen des brevets, No.12/82

**EP 3 012 962 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 20130289934 A1
- US 20070194742 A1
- CN 102983806
- CN 102437813